# EUROPEAN PATENT APPLICATION

(11) **EP 4 656 691 A2**
(43) Date of publication of application: **03.12.2025**
(21) Application number: 25203204.0
(22) Date of filing: 13.10.2022
(51) Int. Cl.: C09D 5/18

(54) **FIRE-RESISTANT GLAZING**

(30) Priority: 14.10.2021 GB 202114670
(62) Divisional of application: 22792879.3
(71) Applicant: Pilkington Group Limited, Lathom Nr. Ormskirk Lancashire L40 5UF (GB)
(72) Inventor: AUTH, Matthias, 45289 Essen (DE); MUNDRY, Gerd, 44265 Dortmund (DE); KORTEWILLE, Bianca, 45884 Gelsenkirchen (DE); STICKDORN, Simon, 44869 Bochum (DE); POERSCH, Andreas, 45894 Gelsenkirchen (DE); SCHADE, Martin, 45884 Gelsenkirchen (DE); SIEBERT, Guido, 45891 Gelsenkirchen (DE)
(74) Representative: Fortt, Simon Merton

(57) **Abstract**

This invention relates to a fire-resistant glazing, a precursor solution for forming an intumescent layer of a fire-resistant glazing, a method of manufacturing the fire-resistant glazing, and to the use of a fire-resistant glazing. More specifically, the present invention relates to a fire-resistant glazing which comprises a phase separation additive and to the manufacture and use thereof.

## Description

This invention relates to a fire-resistant glazing, a precursor solution for forming an intumescent layer of a fire-resistant glazing, a method of manufacturing the fire-resistant glazing, and to the use of a fire-resistant glazing. More specifically, the present invention relates to a fire-resistant glazing which comprises a phase separation additive and to the manufacture and use thereof.

Fire-resistant glazings generally comprise at least two transparent panes and at least one fire-resistant layer disposed between the two transparent panes. The transparent panes are commonly glass panes, although other transparent materials such as polycarbonates may be used. In many countries, regulations exist specifying the fire resistance needed for use in particular locations. Generally, these regulations specify a minimum time for which the glazing must form a barrier to the propagation of fire and/or smoke when the glazing is exposed to a fire.

A common fire-resistant layer is an intumescent layer such as, for example, an intumescent layer comprising alkali silicates. If the intumescent layer is heated to an activation temperature the intumescent layer will intumesce, forming a highly insulating mass. Such intumescence is associated with expansion and foaming of the intumescent layer, which often has a cooling effect. In addition, many intumescent layers contain water, and will release water as vapour, providing a cooling effect that reduces the conduction of heat through the fire-resistant glazing. Intumescent layers have an activation temperature, at which the intumescent layer begins to intumesce.

Intumescent layers for fire-resistant glazings may be formed by a cast-in-place method or a pour-and-dry method. Intumescent layers formed by the cast-in-place method are usually formed by pouring a solution of an intumescent layer precursor between two glass panes followed by an additional curing step.

For example, US 5565273 A discloses a method for the production of a transparent heat protection element using a hydrous alkali silicate, comprising the steps of introducing a pourable composition into a mould cavity between two transparent carrier elements and allowing the composition to cure to form a solid polysilicate layer. An anionic or non-ionogenic surfactant may be added to at least one of the pourable composition and the surfaces of the carrier elements for increasing an adhesion between the polysilicate layer and the carrier elements.

In order for the intumescent layer precursor to be poured between the glass panes, an edge seal is required to form a cavity. The edge seal also prevents the ingress of atmospheric gases into the fire-resistant glazing during use, which can cause "aging" of the intumescent layer if not prevented.

Intumescent layers formed by a pour-and-dry method may be formed directly on the glass pane to be incorporated in the fire-resistant glazing unit.

For example, EP 2557141 B1 discloses a fire protection component which is formed in a planar manner and which is connected to at least one space-bounding surface component such as metal plates. The fire protection component is formed from fire protection material based on an inorganic sol and the composition of the fire protection material comprises SiO₂, surfactants, polyol, alkali-metal oxide, acid, corrosion protection material, and distilled or de-ionized water. The composition of the fire protection material is capable of being poured during production and is capable of being cured by the addition of a base, and the surfactants are anionic, cationic and/or amphoteric.

Alternatively, intumescent layers formed by a pour-and-dry method may be formed on a temporary substrate, and then separated from the temporary substrate and applied as a sheet to the glass pane to be incorporated in the fire-resistant glazing unit.

For example, US 2005016742 A1 discloses a process for the production of a clear flexible film comprising an alkali metal silicate waterglass which comprises spreading a waterglass solution upon the surface of a flexible backing material, drying said solution to form a clear film and separating said film from said backing material. The waterglass solution may comprise a surfactant.

The inventors have discovered that a disadvantage of known fire-resistant glazings is that when the intumescent layer is rapidly heated beyond its activation temperature it may undergo inhomogeneous foaming, also known as "heat-shock". Formation of an inhomogeneous foam allows a large amount of radiative heat to be transmitted through the glazing, undermining its fire-resistant performance.

Previous attempts to improve the foaming behaviour of intumescent layers have considered foam improvement additives. For example, EP 2488362 B1 discloses a transparent fire resistant glazing comprising an intumescent layer, wherein the intumescent layer comprises an alkali metal silicate and a foam improvement additive, wherein the foam improvement additive comprises a polymer and/or oligomer and/or salts thereof, wherein said polymer, oligomer and/or salts thereof each contain at least one organic moiety having at least one hydrogen-bondable functional group covalently attached thereto.

However, such foam improvement additives do not completely solve the presently considered problem.

Therefore, an object of the present invention is to overcome the aforementioned disadvantages. In particular, the present invention aims to provide a fire-resistant glazing which is less-susceptible to heat-shock, and that reduces the conduction of heat through the fire-resistant glazing and improves the insulation properties.

As such, according to a first aspect of the present invention, the inventors have provided a fire-resistant glazing comprising a first sheet of glazing material and an intumescent layer, wherein the intumescent layer comprises a phase separation additive.

In relation to the present invention, the inventors have surprisingly found that the fire-resistant glazings according to the present invention are stable at room temperatures, and help to prevent heat-shock.

In particular, when investigating previous fire-resistant glazings, the inventors discovered that intumescent layers that are prone to heat-shock may greatly undermine the fire-resistant performance of the glazing through a two-stage heat-shock process, described as follows.

When a glazing is exposed to a heat source the glass pane orientated towards the heat source rapidly increases in temperature. The glass pane conducts heat to an area of the intumescent layer in direct contact with the glass pane, this specific area of the intumescent layer is rapidly heated beyond the activation temperature and undergoes a first heat-shock stage, resulting in the formation of an inhomogeneous foaming structure in the specific area of the intumescent layer adjacent to the glass pane orientated towards the heat source.

As a result of the formation of the inhomogeneous foaming structure, a gas layer may form between the remaining bulk of the intumescent layer and the glass pane orientated towards the heat source. This gas layer insulates the bulk intumescent layer from the heat source, preventing the bulk intumescent layer from attaining the required activation temperature for intumescence. Consequently, the remaining bulk of the intumescent layer does not effectively absorb heat from the glass pane orientated toward the heat source, and the glass pane rapidly increases in temperature, while the bulk intumescent layer increases in temperature slowly. This creates a large temperature difference between the glass pane and the bulk intumescent layer.

With continued heating the gas layer increases in temperature and expands, causing the fire-resistant glazing unit to vent the gas layer via destruction of the glass pane orientated toward the heat source and/or via an edge seal.

Following venting of the gas layer, the bulk intumescent layer either comes into contact with the heated glass pane, when venting is via an edge seal, or is directly exposed to the heat source, when venting is via destruction of the glass pane. Subsequently, the bulk intumescent layer rapidly increases in temperature beyond the activation temperature, causing a second heat-shock stage where the bulk intumescent layer foams in an inhomogeneous manner.

The inhomogeneous foaming may allow increased heat radiation through the bulk intumescent layer, and thereby allow an unacceptable transmission of heat through the fire-resistant glazing, ultimately negating its function.

As such, the inventors have realised that the effectiveness of the fire-resistant glazing relies on preventing a rapid temperature change of the bulk intumescent layer and in ensuring that the intumescent layer remains in contact with the glass pane which is orientated towards the heat source.

The inventors have surprisingly discovered that a phase separation additive overcomes the problems aforementioned problems with existing fire-resistant glazings.

Without wishing to be bound by any particular theory, it is believed that the phase separation additive causes an at least partial phase separation of the intumescent layer at a temperature below the activation temperature of the intumescent layer. The at least partial phase separation causes the intumescent layer to turn visibly opaque and is thought to produce a 'heat radiation absorbing emulsion'. The heat radiation absorbing emulsion causes the intumescent layer to be heated more evenly, and reduces the temperature difference between the glass pane and the intumescent layer, thereby reducing the first heat-shock stage and in some cases completely preventing inhomogeneous foaming of an area of the intumescent layer and the formation of an insulating gas layer. Even in cases where a gas layer is formed, the bulk intumescent layer continues to absorb radiative heat despite the presence of the insulating gas layer, reducing the temperature difference between the glass pane and the bulk intumescent layer and thereby reducing the second heat-shock stage.

In addition, the heat radiation absorbing emulsion reduces the transmission of radiative heat through the glazing, thereby increasing the fire-protection performance of the glazing.

As such, the phase-separation additive improves the homogenous foaming behaviour of the intumescent layer, and therefore reduces heat-shock, improving the performance of the fire-resistant glazing.

In addition, the inventors realised that while a phase separation additive improves the fire-resistant glazing's performance during a fire incident, it is preferable that the phase separation does not occur at a temperature that is too low, as this may cause the fire-resistant glazing to appear hazy during normal use in the absence of a fire event, which is not acceptable to consumers. Furthermore, if the phase separation occurs at a temperature that is too low, visibility through the glazing may be impaired at an extremely early stage of a fire incident, which may prevent occupants from assessing a fire situation and thereby delaying potential exit from a dangerous environment.

To solve these aforementioned problems, the inventors have discovered that by selecting the correct phase separation additive and the correct proportion of additive, a partial phase separation or phase modification of the glazing may be controlled and, therefore, the temperature at which the phase separation occurs may be varied.

That is, the phase separation additive preferably provides the required phase separation behaviour to prevent inhomogeneous foaming of the intumescent layer, while also being compatible with the intumescent layer in normal use. A phase separation additive that is not compatible with the intumescent layer may lead to decreased light transmission, haze, optical distortions, poor aging performance, and/or reduced fire performance.

One parameter that may influence the compatibility of the phase separation additive is solubility. Preferably, the phase separation additive has a solubility in water at 20 °C of greater than or equal to 20 mg/mL. More preferably, the phase separation additive has a solubility in water at 20 °C of greater than or equal to 40 mg/mL. Even more preferably, the phase separation additive has a solubility in water at 20 °C of greater than or equal to 50 mg/mL. Additives with lower solubility are associated with increased haze of the intumescent layer at room temperature.

In some embodiments the fire-resistant glazing comprises a first sheet of glazing material and a second sheet of glazing material, wherein the first sheet of glazing material and the second sheet of glazing material are arranged in a spaced-apart face-to-face arrangement. Generally the first sheet of material comprises a first major face, a second major face and at least one edge face and the second sheet of glazing material comprises a first major face, a second major face and at least one edge face, and the first sheet of glazing material and the second sheet of glazing material are arranged in a spaced-apart face-to-face arrangement with the first major faces of the first and second sheet of glazing material facing each other to form a cavity, and wherein the intumescent layer is located within the cavity between the first and second sheets of glazing material. In this configuration, the sheets of glazing material provide support to the intumescent layer to assist in preventing slumping of the intumescent layer. The term slumping is used herein to describe a collapse or subsidence of the intumescent layer away from the glass sheets and glazing.

Preferably, the first sheet of glazing material and/or the second sheet of glazing material comprises glass. Preferably, the first sheet of glazing material and/or the second sheet of glazing material comprises soda-lime silica glass. Glass, in particular soda-lime silica glass is a suitable choice as it is readily available and has excellent optical characteristics. Preferably, the first sheet of glazing material and/or the second sheet of glazing material comprises strengthened glass. The glass may be strengthened by heat treatment, tempering, toughening, chemical strengthening, or a combination thereof. For some uses strengthened glass may be particularly preferred or even required to meet regulations.

In some embodiments, the fire-resistant glazing comprises multiple intumescent layers separated by sheets of glazing material. This is beneficial when a higher resistance to fire is required. Where multiple intumescent layers are provided, they may have the same composition or different compositions.

Alternatively, or in addition, the fire-resistant glazing may comprise gas or vacuum filled cavities or may be a part of an insulated glazing unit comprising gas or vacuum filled cavities. This is beneficial when it is desirable to improve the thermal and/or sound insulation properties of the glazing.

Alternatively, or in addition, laminated glass may be used within the fire-resistant glazing. This is beneficial when it is desirable for the impact properties of the glazing to be improved.

In some embodiments one or more surface of one or more sheet of glazing material may preferably comprise one or more coatings selected from but not limited to: a low-emissivity coating, an infra-red reflection coating, a conductive coating, a self-cleaning coating, an antimicrobial coating and/or a UV reflecting coating.

In some embodiments, the fire-resistant glazing may comprise a primary sealant. Preferably the primary sealant comprises a polyisobutylene, such as GD 115 available from Koe-Chemie. The primary sealant preferably prevents ingress of moisture and gas permeation. The primary sealant may be a spacer. Alternatively, the glazing may comprise a separate spacer, which may comprise materials including metals, polymers and/or thermoplastics. Example metals include steel, aluminium, and titanium. Example polymers include polyethylene (PE), polypropylene (PP), polytetrafluoroethylene (PTFE), polyvinyl chloride (PVC), acrylonitrile butadiene styrene (ABS), polyurethane (PU), polyisobutylene. The spacer may be a combined primary sealant thermoplastic spacer. A suitable primary sealant spacer comprising polyisobutylene is, for example, Ködimelt Thermoplastic Spacer (TPS) available from Kömmerling Chemische Fabrik GMBH.

In some embodiments, the fire-resistant glazing may comprise a secondary sealant. Preferably the secondary sealant comprises polysulfide or a derivative, and/or silicone or a derivative, and/or polyurethane or a derivative, and/or a "hotmelt". Examples of polysulfides include 2-component polysulfides such as GD 116 or Naftotherm M82-936 available from Koe-Chemie. Examples of silicones include 2-component structural glazing silicone such GD 920 available from Koe-Chemie. Examples of polyurethanes include 2-component polyurethanes such as GD 667 NA available from Koe-Chemie. Examples of "Hotmelts" include isomelt and Ködimelt IG available from Koe-Chemie. The secondary sealant preferably connects the glazing sheets and seals the spacer width hermetically.

In some embodiments, the at least one phase separation additive comprises a weak acid, a weak base, and/or a compound that decomposes to form a gas.

The inventors have discovered that such phase separation additives are particularly beneficial because they not only provide phase separation performance, but also do not noticeably degrade aging performance.

In some embodiments the at least one phase separation additive comprises a weak acid having a pKₐ value of 17 or less, preferably the at least one phase separation additive comprises a weak acid having a pKₐ value of 15 or less.

Throughout the present disclosure, pKa values are given relative to water as measured at 25 °C. Table 1 contains potential phase separation additives and their pKa values.

**Table 1**

| Additive | pKa |
|---|---|
| Diethylene Glycol | 14 |
| Triethylene Glycol | 14 |
| Di(propylene glycol) methyl ether | 14.5 |
| Monoethylene Glycol | 14.3 |
| Ethanol | 16.0 |
| Methanol | 15.5 |
| Isopropanol | 17.1 |

Where the phase separation additive comprises a weak acid, preferably the pKₐ of the acid is from 11 to 17. Acids with lower pKₐ values may be incompatible with the intumescent layer due to increased haze, while acids with higher values of pKₐ may be less effective phase separation additives. Preferably the pKₐ of the weak acid is less than 15. Preferably the pKa of the weak acid is greater than 10. More preferably, the pKa of the weak acid is greater than 13. As such, in some preferred embodiments, the pKₐ of the weak acid is preferably from 13 to 15.

In some embodiments, the at least one phase separation additive preferably comprises an alcohol, preferably an alcohol selected from triethylene glycol, diethylene glycol, di(propylene glycol) methyl ether.

The inventors have discovered that these are particularly effective phase separation additives.

Alternatively, in some embodiments, the at least one phase separation additive does not comprise glycerol, and/or the at least one phase separation additive does not comprise monoethylene glycol, and/or the at least one phase separation additive does not comprise polyethylene glycol, and/or the at least one phase separation additive does not comprise a hydroxylated amine compound, and/or the phase separation additive does not comprise a quarternary ammonium salt, and/or the phase separation additive does not consist of water.

That is, the inventors have discovered that glycerol and/or monoethylene glycol are not preferred phase separation additives because a large amount of glycerol and/or monoethylene glycol is required to cause homogenous foaming behaviour and an opacity change at less than 120 °C, and these large amounts are associated with a reduction in aging performance and a reduction in adhesion to the glass panes. Also, it is noted that water itself is not effective as a phase separation additive. In addition, the inventors have discovered that triacetin is not a suitable phase separation additive due to poor solubility.

Furthermore, the inventors have discovered that polyethylene glycol is not a preferred phase separation additive because light distortion may be seen in the fire-resistant glazing. In addition, the comparatively poor solubility of polyethylene glycol causes a higher proportion of quality failures in the production of fire-resistant glazings comprising an intumescent layer comprising polyethylene glycol when compared to other phase separation additives.

The phase separation additive may preferably comprise compounds selected from inorganic salts, organic solvents, organic acids, organic bases, organic salts, and mixtures thereof.

Where the phase separation additive comprises an inorganic salt, preferably the phase separation additive does not comprise alkali earth salts such as salts of beryllium, magnesium, calcium, strontium, barium, and radium. The inventors have found that such alkali earth salts are not compatible with the intumescent layer due to reduced aging performance.

In some embodiments, the at least one phase separation additive does not comprise ethanol and/or the at least one phase separation additive does not comprise methanol, and/or the at least one phase separation additive does not comprise isopropanol.

The inventors have discovered that ethanol, methanol, and isopropanol do not provide desirable properties and are therefore not preferred phase separation additives. It is believed that this is due to their higher than desired pKa values, ethanol: 16.0, methanol: 15.5, isopropanol: 17.1.

In some embodiments, the at least one phase separation additive preferably comprises a weak base having a pK_{b} value of less than 17, preferably the at least one phase separation additive comprises a weak base having a pK_{b} value of less than 15.

Where the phase separation additive comprises a base, preferably the pK_{b} of the base is from 11 to 17. More preferably, the pK_{b} of the base is from 13 to 15. Bases with lower values of pK_{b} may be incompatible with the intumescent layer due to increased haze, while bases with higher values of pK_{b} may not be such effective phase separation additives.

In some embodiments the at least one phase separation additive preferably comprises a compound that produces a gas upon decomposition, preferably a gas comprising carbon dioxide, nitrogen, a nitrogen oxide, or a mixture of the same.

In some embodiments, the at least one phase separation additive preferably comprises a compound that decomposes to form a gas comprising COₓ, O₂, N₂, NₓO_{y}, SO_{z} wherein x may be 1 or 2, y may be 1, 2 or 3 and z may be 2 or 3.

In some cases, the phase separation additive comprises a compound that decomposes to form a gas at a temperature of between 100 and 1000 °C. Whilst not wishing to be bound by any particular theory, it is opined that temperatures in this range may occur at an early stage of the fire incident in the immediate vicinity of the glass pane, causing some local decomposition of the compound. The localised decomposition into gas helps to promote improved foam structure.

Preferably, the compound decomposes at a temperature of greater 150 °C, more preferably greater than 200 °C, even more preferably greater than 250 °C. Decompositions at temperatures lower than this may be initiated by concentrated sunlight, leading to an irreversible increase in haze in the intumescent layer which is unacceptable to customers.

Preferably the compound decomposes at a temperature of less than 500 °C, preferably less than 450 °C. Decompositions at temperatures higher than this may still produce beneficial foam structures, but the gas evolved from the additive will have less influence on the foam structure due to evolution later in the fire incident.

Table 2 provides the gas decomposition temperatures of exemplary phase separation additives.

**Table 2**

| Additive | Gas Decomposition Temperature °C |
|---|---|
| Sodium Azide NaN₃ | 300 |
| Sodium Nitrate NaNO₃ | 380 |
| Potassium Nitrate KNO₃ | 400 |
| Sodium Nitrite NaNO₂ | 280 |
| Potassium Nitrite KNO₂ | 410 |
| Sodium Carbonate | 780 |
| Potassium Carbonate | 891 |

In some embodiments, the at least one phase separation additive comprises a carbonate, preferably a potassium or sodium carbonate or a mixture thereof, or a nitrate, preferably a potassium or sodium nitrate or a mixture thereof, or a citrate, preferably potassium citrate, or an organic compound, preferably urea, or sodium azide, or combinations thereof.

However, in some cases sodium azide may not be a preferred phase separation additive due to high toxicity.

Preferably, the carbonate comprises potassium or sodium carbonate or a mixture thereof. Preferably the nitrate comprises potassium or sodium nitrate or a mixture thereof. Preferably the nitrite comprises potassium or sodium nitrite or a mixture thereof. In some cases, the phase separation additive may comprise a carboxy group containing compound such as a citrate and/or a tartrate, preferably potassium or sodium citrate or a mixture thereof.

In some embodiments, the phase separation additive may comprise a compound with at least one amine, imine or imide group, and/or a compound with at least one glycosidic bond, and/or a compound with at least one ester, acetal or ether group, and/or a compound with at least one peptide group, and/or a compound with at least one azide group. Preferably the compound with at least one amine, imine and/or imide group is urea. Preferably, the compound with at least one glycosidic bond is malt sugar or lactose. Preferably, the compound with at least one ester, acetal or ether group is diethylene glycol. Preferably, the compound with at least one amide group is Caprolactam. Preferably, the compound with at least one azide group is sodium azide.

In some embodiments, the intumescent layer comprises from 0.01 weight % to 2 weight % of the at least one phase separation additive.

Preferably the sum of the weight percentages of all phase separation additives in the intumescent layer is from 0.01 weight % to 2 weight %. The inventors have discovered that a lower weight % of phase separation additive is insufficient to cause the beneficial properties of the phase separation additive, while a higher weight % of phase separation additive causes increased light distortion through the fire-resistant glazing or accelerated ageing. In addition, a higher weight % of phase separation additive reduces the adhesion of the intumescent layer to cold side glass in the event of a fire incident, causing an increased risk of slumping of the intumescent layer, which reduces the effectiveness of the intumescent layer. As such, the additive and the weight % of the additive in the layer must be controlled to provide suitable adhesion between the intumescent layer and the glass, maintain the desirable light transmission properties of the glazing, and to control the initiation temperature of the intumescent layer.

Non-limiting embodiments a) to e) of the present invention are provided below. It is preferable that for each of these embodiments the intumescent layer comprises alkali-silicate.
a). A fire resistant glazing wherein, when the phase separation additive comprises diethylene glycol, the weight % of diethylene glycol in the intumescent layer is preferably from 0.1 to 2, preferably from 0.5 to 1.5.
b). A fire resistant glazing wherein, when the phase separation additive is a nitrate, preferably potassium nitrate, the weight % of nitrate in the intumescent layer is preferably from 0.1 to 1, preferably from 0.2 to 0.6.
c). A fire resistant glazing wherein, when the phase separation additive is a carbonate, preferably potassium carbonate, the weight % of carbonate in the intumescent layer is preferably from 0.1 to 1.0, preferably from 0.2 to 0.8, even more preferably 0.3 to 0.5.
d). A fire resistant glazing wherein, when the phase separation additive comprises a sugar, preferably lactose, the weight % of sugar in the intumescent layer is preferably from 0.4 to 1.0, preferably from 0.6 to 0.8.
e). A fire resistant glazing wherein, when the phase separation additive comprises sodium citrate, the weight % of sodium citrate in the intumescent layer is preferably from 0.4 to 1.0, preferably from 0.6 to 0.8.

In some embodiments, the intumescent layer comprises alkali-silicate. Alkali-silicate intumescent layers may be manufactured simply and provide excellent fire-resistant performance. Preferably, the intumescent layer further comprises organic material. Preferably the intumescent layer comprises water.

In particular, it is preferred that embodiments a) to e) comprise alkali silicate, preferably with a weight % of water of from 30 to 50.

Alternatively, the intumescent layer may comprise an organic hydrogel such as those described in US 4264681, the contents of which are included herein by reference.

In some embodiments, the fire-resistant glazing is substantially transparent to visible light at a temperature of less than or equal to 25 °C, preferably the fire-resistant glazing is substantially transparent to visible light at a temperature of less than or equal to 50 °C.

When not exposed to fire and/or heat, it is desirable that the fire-resistant glazing is substantially transparent to visible light, such that the fire-resistant glazing may transmit light. Herein, substantially transparent is defined as a visible light transmission of 70% or greater, preferably 80% or greater. In some cases, for example when the fire-resistant glazing is installed in a location exposed to very bright sunlight, the temperature of the glazing may reach up to 50 °C despite not being exposed to fire and/or heat. In such cases, it is beneficial that the fire-resistant glazing remains transparent, such that the fire-resistant glazing may transmit light. In addition, in situations where a fire is present, but the temperature of the fire-resistant glazing has not yet reached 50 °C, it is beneficial that building occupants may see through the fire-resistant glazing to assess the situation of any fire, occupants and/or escape routes.

Preferably, the fire-resistant glazing has a g-value of more than 60% at room temperature. More preferably, the fire-resistant glazing has a g-value of more than 65% at room temperature. Even more preferably, the fire-resistant glazing has a g-value of more than 70% at room temperature. The g-value used herein refers to the coefficient used to measure the solar energy transmittance of glazings.

In some embodiments, the intumescent layer initiation temperature is from 60 to 120 °C, preferably from 65 to 110 °C, more preferably from 70 to 95 °C.

The temperature at which the intumescent layer begins to turn opaque is termed the initiation temperature. In particular, the temperature at which the intumescent layer undergoes a change in light transmission of greater than 10% and/or a change in g-value of greater than 10% is equivalent to the initiation temperature. This temperature may be readily assessed by testing of the fire glazing or testing of a sample of the intumescent layer. It is beneficial that this temperature is from 60 to 130 °C, preferably from 65 to 110 °C, more preferably from 70 to 95 °C. Higher transformation initiation temperatures will not prevent the transmission of heat through the fire-resistant glazing at an early stage in the event of a fire, and lower transformation initiation temperatures may cause the fire-resistant glazing to become opaque either when no fire is present, due to the incidence of bright sunlight, or too early in a fire event, preventing occupants viewing the fire situation through the glazing.

In some cases, the fire-resistant glazing is a semi-finished product. Such semi-finished products may be further processed to add additional functional and/or aesthetic components or features.

According to second aspect there is provided a precursor solution for forming an intumescent layer of a fire-resistant glazing comprising alkali silicate, water and at least one phase separation additive.

Such precursor solutions may be used for forming intumescent layers.

In some embodiments, the precursor solution may comprise from 0.01 weight % to 2 weight % of the least one phase separation additive. In some embodiments, the sum of the weight percentages of all phase separation additives in the precursor solution is from 0.01 weight % to 2 weight %.

As discussed above, the inventors have discovered that a lower weight % of phase separation additive is insufficient to cause the beneficial properties of the phase separation additive, while a higher weight % of phase separation additive causes increased light distortion through the fire-resistant glazing or accelerated ageing. In addition, a higher weight % of phase separation additive reduces the adhesion of the intumescent layer to cold side glass in the event of a fire incident, causing an increased risk of slumping of the intumescent layer, which reduces the effectiveness of the intumescent layer. As such, the additive and the weight % of the additive in the precursor solution must be controlled to provide suitable adhesion between the resultant intumescent layer and the glass, maintain the desirable light transmission properties of the glazing, and to control the initiation temperature of the intumescent layer.

Preferably, when the phase separation additive comprises diethylene glycol, the weight % of diethylene glycol in the precursor solution is from 0.1 to 2, preferably from 0.5 to 1.5.

Preferably, when the phase separation additive is a nitrate, preferably potassium nitrate, the weight % of nitrate in the precursor solution is from 0.1 to 1, preferably from 0.2 to 0.4.

Preferably, when the phase separation additive is a carbonate, preferably potassium carbonate, the weight % of carbonate in the precursor solution is from 0.1 to 1.0, preferably from 0.2 to 0.8.

Preferably, the precursor solution comprises from 20 to 60 weight % water. More preferably, the precursor solution comprises from 40 to 50 weight % water. The inventors are of the opinion that that water content may influence the temperature at which the solution turns opaque, due to local precipitation and dissolution effects. A higher weight % of water results in a higher temperature at which the solution becomes opaque, which may reduce fire performance at an early stage in a fire incident. However, a lower weight % of water may result in a lower temperature at which the solution becomes opaque, resulting in opacity changes due to incidental increased temperatures such as due to sunlight, and a reduction in the reversibility of the opacity change, resulting in reduced aging performance.

According to a third aspect of the present invention, there is provided a method of manufacturing a fire-resistant glazing according to the first aspect, comprising the steps of:
(i) providing a substrate;
(ii) providing a precursor solution preferably according to the second aspect of the invention;
(iii) applying the precursor solution to the substrate; and
(iv) curing the precursor solution to form an intumescent layer.

In some embodiments, the substrate is a first sheet of glazing material arranged in a spaced-apart face-to-face arrangement with a second sheet of glazing material to provide a cavity, and the step of applying the precursor solution to the substrate comprises providing the precursor solution in the cavity.

Such a process is commonly termed a "cast-in-place" method. When the intumescent layer is provided by a cast-in-place process the fire-resistant glazing may comprise a spacer and/or primary sealant and/or a secondary sealant. As such, the substrate may be a first sheet of glazing material for forming a fire-resistant glazing, where the first sheet of glazing material is incorporated in a cell, wherein the precursor solution is provided in a cavity formed by two sheets of glazing material as in the cast-in-place process.

In some embodiments, the substrate is a first sheet of glazing material and the step of applying the precursor solution to the substrate comprises providing the precursor solution as a layer upon the first sheet of glazing material which is subsequently cured.

Such a process is commonly termed a "pour-and-dry" method. As such, the substrate may be a first sheet of glazing material for forming a fire-resistant glazing, where the intumescent layer is provided on the sheet of glazing material in a pour-and dry process.

In some embodiments, the intumescent layer is removed from the substrate and applied to a first sheet of glazing material after the step of curing the precursor.

Such a process may make use of a temporary substrate to provide the intumescent layer. As such, the substrate may be an alternative substrate, where the intumescent layer is formed and then transferred to the fire-resistant glazing. Preferably, the temporary substrate is not incorporated in the fire-resistant glazing.

According to a fourth aspect of the present invention, there is provided a fire-resistant glazing assembly comprising a fire-resistant glazing according the first aspect, or manufactured according to the third aspect.

Regulations classify the fire resistance of glazings by the measurement of the minimum time for which a glazing maintains: (i) its structural integrity (termed E); (ii) its structural integrity and radiation reduction within specified limits (termed EW); and (iii) its structural integrity and insulation within specified limits (termed EI) when exposed to a fire. Standard tests to determine the classification of the fire resistance of glazing are known and typically involve exposing the one side of the glazing unit (the "fire side" or "hot side") to a fire and monitoring the integrity of the glazing, and/or temperature levels on the opposing side of the glazing (the "cold side") over time.

Preferably, the fire-resistant glazing according to the present invention conforms to at least E 30 standard, preferably at least E 60 standard, more preferably at least E 120 standard, measured according to DIN EN 13501-2.

Preferably, the fire-resistant glazing according to the present invention conforms to at least EI 15 standard, preferably at least EI 30 standard, more preferably at least EI 60 standard, measured according to DIN EN 13501-2.

Preferably, the fire-resistant glazing according to the present invention conforms to at least EW 30 standard, preferably at least EW 60 standard, more preferably at least EW 90 standard, measured according to DIN EN 13501-2.

For maritime glazings, glazings may be classified using A and B standards according to IMO A.754(18).

Preferably, the fire-resistant glazing according to the present invention conforms to at least A0 standard, preferably at least A15, more preferably at least A30, yet more preferably A60 according IMO A.754(18).

Preferably, the fire-resistant glazing according to the present invention conforms to at least B0 standard, preferably at least B15, according to IMO A.754(18).

For trains and transportation glazings may be classified using A1 and A2 standards according to EN 45545 part 3.

Preferably, the fire-resistant glazing according to the present invention conforms to at least A1-15 standard, preferably at least A1-30 standard, according to EN 45545 part 3.

Preferably, the fire-resistant glazing according to the present invention conforms to at least A2-15 standard, preferably at least A2-30 standard, according to EN 45545 part 3.

In some embodiments, the fire-resistant glazing assembly comprises more than one intumescent layer.

A fire-resistant glazing assembly may incorporate more than one intumescent layer, where improved fire-resistance is required. In some cases, the fire-resistant glazing assembly comprises a first fire-resistant glazing with a first intumescent layer and a second fire-resistant glazing with a second intumescent layer. Where the fire-resistant glazing assembly comprises a first intumescent layer and a second intumescent layer the composition of the first intumescent layer may be the same as, or different from, the second intumescent layer.

According to a fifth aspect of the present invention, there is provided a use of a fire-resistant glazing according to the first aspect or a fire-resistant glazing assembly according the fourth aspect in a building for reducing the passage of fire and/or smoke and/or heat.

The optional features of any aspect of the present invention may be combined with any other aspect of the present invention, in any number. In particular, dependent claims applicable to any aspect may be applied to any other aspect.

Embodiments of the invention will now be described in detail by way of example with reference to the Figures, in which:
Figure 1 depicts a fire-resistant glazing according to an embodiment of the present invention in cross-section;
Figure 2 depicts a fire-resistant glazing according to an alternative embodiment of the present invention in cross-section;
Figure 3 depicts a graph of turbidity against temperature for a series of intumescent layer precursor solutions comprising potassium carbonate;
Figure 4 depicts a graph of turbidity against temperature for a series of intumescent layer precursor solutions comprising potassium nitrate;
Figure 5 depicts photographs of example intumescent layer precursor solutions at different temperatures; and
Figure 6 depicts a graph of turbidity against temperature for a series of intumescent layer precursor solutions comprising diethylene glycol.

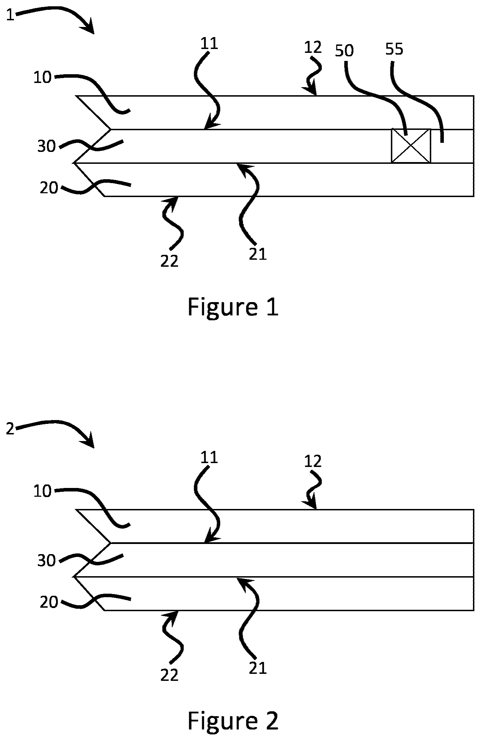

In Figure 1 a fire-resistant glazing 1 according to an embodiment of the present invention is depicted. This fire-resistant glazing is formed by a "cast in place" method and comprises a first sheet of glazing material 10 comprising a first major face 11 and a second major face 12, and a second sheet of glazing material 20 comprising a first major face 21 and a second major face 22. The second sheet of glazing material 20 is in a spaced-apart face-to-face arrangement with the first sheet of glazing material 10, wherein the first major face 11 of the first sheet of glazing material 10 faces the first major face 21 of the second sheet of glazing material 20. The fire-resistant glazing 1 further comprises an intumescent layer 30 between the first sheet of glazing material 10 and the second sheet of glazing material 20, and a spacer 50 and a secondary sealant 55 are provided around the periphery of the fire-resistant glazing 1.

A spacer 50, is provided between the sheets of glazing material 10, 20. The spacer is conventionally provided to maintain the distance between the first and second sheets of glazing material 10, 20 and spacers are often provided around substantially the entire periphery of the glazing. The spacer may be a thermoplastic spacer comprising a primary sealant.

A secondary sealant 55 is provided between the sheets of glazing material. The secondary sealant 55 is conventionally applied to reduce the ingress of air, which may cause the intumescent layer 30 to become hazy or discoloured and thereby reduce visibility through the fire-resistant glazing 1 over time. In addition, the secondary sealant 55 may also prevent egress of the intumescent layer from the fire resistant glazing prior to a fire incident.

In Figure 2 a fire-resistant glazing 2 according to an alternative embodiment of the present invention is depicted. This fire-resistant glazing is formed by a "pour-and-dry" method and comprises a first sheet of glazing material 10 comprising a first major face 11 and a second major face 12, and a second sheet of glazing material 20 comprising a first major face 21 and a second major face 22. The second sheet of glazing material 20 is in a spaced-apart face-to-face arrangement with the first sheet of glazing material 10, wherein the first major face 11 of the first sheet of glazing material 10 faces the first major face 21 of the second sheet of glazing material 20. The fire-resistant glazing 2 further comprises an intumescent layer 30 between the first sheet of glazing material 10 and the second sheet of glazing material 20. In some embodiments, additional spacers, seals, and tapes may be provided.

In addition, whilst each edge face of the sheets of glazing material are illustrated in Figures 1 and 2 as substantially aligned, alternatively, the edge face of one or more sheets of glazing may protrude out of alignment with the edge face of a second or further sheet of glazing material. That is, the sheets of glazing material may be staggered. That is, each embodiment may be provided with aligned sheets of glazing material, or staggered sheets of glazing material. Nevertheless, the skilled person will readily appreciate that such an arrangement results in a glazing edge that may be offered to the frame during installation.

Whilst in the embodiments described above only two sheets of glazing material are depicted, the embodiments of the present invention described also cover embodiments of fire resistant glazings with three, four, or more sheets of glazing material.

In addition, the embodiments described above may form a part of or a whole fire-resistant glazing. That is, the embodiments may be repeated, or combined together, to form fire-resistant glazings with multiple intumescent layers and/or multiple intumescent edge mass portions. This arrangement is particularly beneficial when fire-resistant glazings are required which provide longer fire-resistance time.

The inventive glazings according to the present invention may be provided with an edge tape for encapsulating the edge of the glazing to prevent water ingress. Such edge tapes should be sufficiently thin and flexible to conform to the profile of the glazing edge and/or the profile of the secondary seal, to prevent trapping air within the glazing edge region.

In a further modification of each of the embodiments described above, one or more of the first major faces of each sheet of glazing material may comprise an enamel coating. The enamel coating may also extend around the periphery of one or more sheets of glazing material in the fire resistant glazing. Enamel coatings may provide an aesthetically pleasing edge region to the fire-resistant glazing. The enamel coating may also protect the primary and/or secondary seals from degradation by UV light. When applied, the enamel coating may extend from between 15 mm to 20 mm from the edge of the sheet of glazing material.

Experimental embodiments of the present invention will now be described by way of example.

A comparative example precursor solution CE1 was produced as described in WO 2008053247 A1, comprising a degassed 1:1 formulation of a silica sol and a potassium water glass with 45 weight % water.

Example precursor solutions according to the present invention were produced as described in Table 3, wherein a phase change additive of K₂CO₃ with weight % in the total solution is added to the precursor solution of CE1.

**Table 3**

| **Example** | **Weight % Additive** | **Opacity at 85 °C** | **Opacity at RT after heating** | **Initiation Temperature (°C)** | **Opaque Temperature (°C)** | **Turbidity after 4 days aging** |
|---|---|---|---|---|---|---|
| CE1 | - | Clear | Clear | 100 | >110 | 3.24 |
| 1 | 0.1 | | | 95 | > 105 | |
| 2 | 0.2 | Clear | Clear | 85 | 100 | 3.83 |
| 3 | 0.3 | | | 80 | 95 | |
| 4 | 0.4 | Opaque | Clear | <75 | 80 | - |
| 5 | 0.6 | Opaque | Clear | - | - | 5.51 |
| 6 | 0.7 | Opaque | Clear | - | - | 8.32 |
| 7 | 0.8 | Opaque | Clear | - | - | 25.3 |
| 8 | 0.9 | Opaque | Clear | - | - | 536 |
| 9 | 1.0 | Opaque | Opaque | - | - | - |

The response of the precursor solutions CE1 and examples 1 to 9 to heat was tested by placing tubes containing the precursor solutions in an oven at 85 °C for at least an hour, and the opacity of the precursor solutions judged by eye by opening the oven door. It is desirable that the precursor solution is opaque at 85 °C as, during a fire event, an intumescent layer should at least start to become opaque at this temperature. This will result in the opaque heat radiation absorbing emulsion to be present at a low enough temperature to influence the heating of the intumescent layer. As can be seen from Table 3, CE1 and example precursor solutions with less than 0.4 weight % of carbonate remain clear at 85 °C, which is undesirable, due to a reduced fire performance early in a fire incident. Meanwhile, example precursor solutions with a weight % of carbonate from 0.4 to 1.0 are opaque at 85 °C, which indicate that they will provide an intumescent layer that at least starts to become opaque at 85 °C, and therefore will block the passage of heat more effectively early in a fire event, leading to improved fire-resistant glazing performance.

Following heating, precursor solutions were returned to room temperature. It is desirable that the samples, having become opaque when heated to 85 °C, become clear once returned to room temperature because this indicates that the change in opacity is reversible. If the change in opacity is not reversible, over time incidental raised temperature events, such as from reflected or concentrated sunlight, will cause irreversible opacification of sections of intumescent layer resulting in a hazy appearance - that is, the aging performance of the intumescent layer produced from the solution is reduced. As shown by the examples, if the additive weight % is too high the appearance of the precursor solution, and therefore the resultant interlayer, does not return to clear at room temperature. In particular, a weight % of 1.0 or greater of carbonate results in a precursor solution that does not return to clear at room temperature.

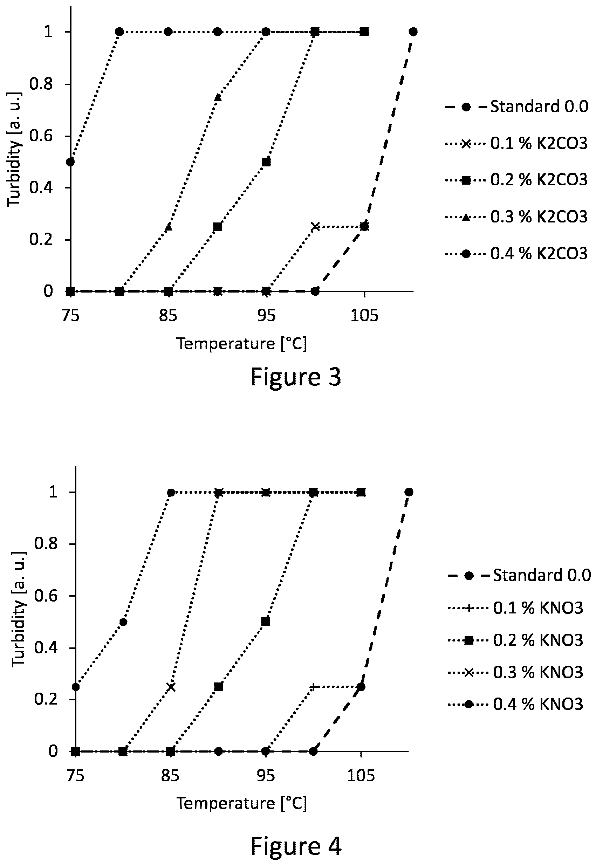

Table 3 also depicts the results of a study to investigate and find the initiation temperature of the opacity change. Precursor solutions CE1 and examples 1 to 4 were heated in steps of 5 °C and their opacity at each temperature assessed. The visual response of the precursor solutions to temperature was confirmed by measuring the turbidity of the precursor solutions using a calibrated nephelometer 2100AN available from Hach Lange GmbH. The attenuation (A.U.) of precursor solutions containing potassium carbonate additives is depicted in Figure 3. A turbidity of 1 a.u. is considered to be equivalent to completely opaque.

It is desirable that the initiation temperature is not greatly below 85 °C, so that the resultant layer does not become hazy due to incidental increased temperature. However, as discussed above, it is desirable that the resultant layer is completely opaque at 85 °C. As such, preferably the difference between the initiation temperature and the opaque temperature is less than or equal to 10 °C, more preferably the difference between the initiation temperature and the opaque temperature is less than or equal to 5 °C. Precursor solutions and/or intumescent layers having such a difference between initiation and opaque temperatures have clearly perceptible opacity changes that improve performance during a fire incident, while preventing haziness due to incidental temperature increases. A greater difference between initiation and opaque temperature will result in reduced fire performance, and/or increased haziness due to incidental temperature increases.

Table 3 further depicts the aging performance of the carbonate based additives. As can be seen from the examples, when a higher weight proportion of additive is included in the precursor solution this causes a reduction in aging performance. In particular, when the additive is a carbonate, such as potassium carbonate, the aging performance is reduced at 0.6 weight % or above, and significantly reduced at 0.8 weight % or above. However, if the weight % of additive in the formulation is too low, the temperature response performance is reduced. For example, a weight % of carbonate of less than 0.3 causes the temperature at which the formulation becomes opaque to be 90 °C, which may be unsuitable for some applications. Therefore, when the additive is a carbonate, such as potassium carbonate, the content of additive in the precursor solution may in some cases be from 0.1 to less than 0.6 weight %.

Further example precursor solutions according to the invention were prepared comprising potassium nitrate, as depicted in Table 4.

**Table 4**

| **Example** | **Additive** | **Weight % Additive** | **Opacity at 85 °C** | **Initiation Temperature (°C)** | **Opaque Temperature (°C)** | **Opacity at RT after heating** | **Turbidity after 4 days aging** |
|---|---|---|---|---|---|---|---|
| CE1 | - | - | Clear | 100 | >110 | Clear | 3.24 |
| 10 | KNO₃ | 0.1 | Clear | 95 | > 105 | Clear | 3.56 |
| 11 | KNO₃ | 0.2 | Clear | 85 | 100 | Clear | 3.93 |
| 12 | KNO₃ | 0.3 | Clear | 80 | 90 | Clear | 3.83 |
| 13 | KNO₃ | 0.4 | Opaque | <75 | 85 | Clear | - |

Examples comprising a nitrate additive were prepared and the response of the example precursor solutions to heat was tested by placing tubes containing the example precursor solutions in an oven at 85 °C for at least an hour, and the opacity of the samples judged by eye by opening the oven door. As can be seen from table 4, when the additive is a nitrate, such as potassium nitrate, additive of lower than 0.3 weight % does not result in a change of opacity at 85 °C and is therefore undesirable as an intumescent layer formed from such a solution will not provide the desired fire performance. Nitrate with a weight % of 0.4 has an initiation temperature of less than 75 °C and an opaque temperature of 85 °C, indicating that the opacity change is very perceptible. The visual response of the samples to temperature was confirmed by measuring the turbidity of the samples using a calibrated nephelometer 2100AN available from Hach Lange GmbH. The attenuation (A.U.) of samples containing potassium nitrate additives is depicted in Figure 4. A turbidity of 1 a.u. is considered to be equivalent to completely opaque.

Therefore, where the additive comprises potassium nitrate it is preferable that the weight % of additive is from 0.1 to 1, and preferably from 0.2 to 0.6.

Further samples according to the invention were prepared comprising nitrate based additives, as depicted in Table 5.

**Table 5**

| Example | Additive | Weight % Additive | Opacity at 85 °C | Initiation Temperature (°C) | Opaque Temperature (°C) | Opacity at RT after heating |
|---|---|---|---|---|---|---|
| CE1 | - | - | Clear | 100 | >110 | Clear |
| 14 | NaNO₃ | 0.1 | Clear | 95 | 105 | Clear |
| 15 | NaNO₃ | 0.2 | Clear | 85 | 95 | Clear |
| 16 | NaNO₃ | 0.3 | Opaque | 75 | 85 | Clear |
| 17 | NaNO₃ | 0.4 | Opaque | <75 | 80 | Clear |

Example precursor solutions with from 0.8 to 1.0 weight % NaNO₃ are opaque at room temperature, and example precursor solutions with from 0.5 to 0.7 weight % NaNO₃ become opaque between room temperature and 75 °C. Therefore, when the additive comprises NaNO₃ preferably the weight % of NaNO₃ is from 0.1 to 0.6, more preferably from 0.2 to 0.4, even more preferably from 0.25 to 0.35.

Further example precursor solutions according to the invention were prepared comprising diethylene glycol (DEG) and triethylene glycol (TEG) additives, as depicted in Table 6.

**Table 6**

| Example | Additive | Weight % Additive | Initiation Temperature (°C) | Opaque Temperature (°C) |
|---|---|---|---|---|
| CE1 | - | - | 100 | >110 |
| 18 | DEG | 0.1 | 100 | 110 |
| 19 | DEG | 0.2 | 95 | 105 |
| 20 | DEG | 0.3 | 95 | 105 |
| 21 | DEG | 0.4 | 90 | 100 |
| 22 | DEG | 0.5 | 85 | 100 |
| 23 | DEG | 0.6 | 85 | 95 |
| 24 | DEG | 0.7 | 80 | 90 |
| 25 | DEG | 0.8 | 80 | 90 |
| 26 | DEG | 0.9 | 75 | 85 |
| 27 | DEG | 1 | <75 | 85 |
| 28 | TEG | 1 | 75 | 80 |

When using a diethylene-glycol (DEG) additive, an increasing weight % of additive appears to reduce the initiation temperature at which the intumescent layer begins to become opaque. Also, the opaque temperature is reduced by increasing weight % of additive. Triethylene glycol (TEG) was found to have a similar behaviour. However, the inventors found that at higher weight percentages, for example above 2 weight %, the aging performance of the precursor solution was significantly impaired.

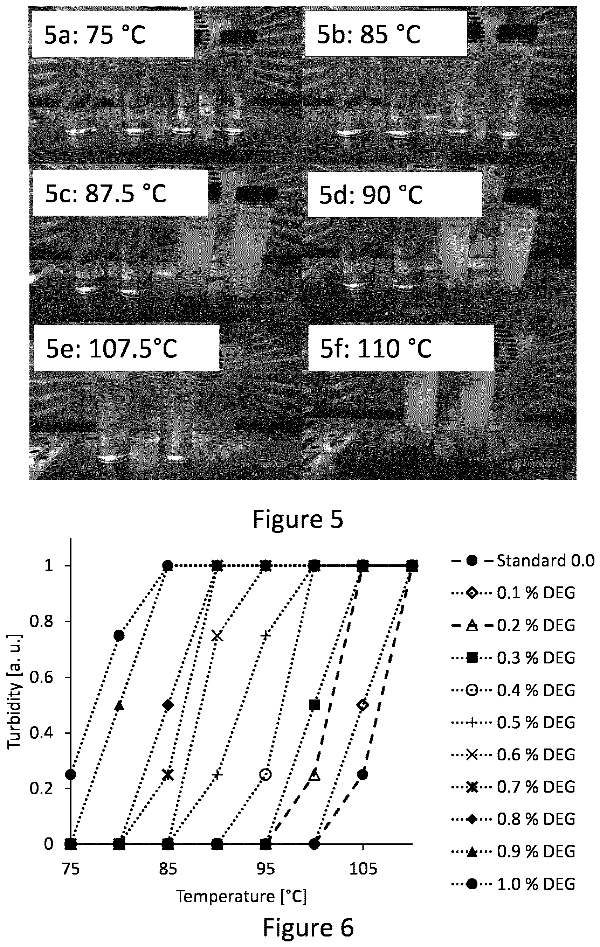

Figure 5 depicts the investigation carried out into the effect of temperature on the turbidity of a series of precursor solutions comprising alkali silicate and including 0.7 weight % diethylene glycol. Following curing of the precursor solutions in glass tubes and cooling to room temperature, the samples were placed in an oven, and the oven temperature was initially adjusted to 75 °C. Every 30 minutes the temperature was increased by 5 °C, and intermediate steps of 2.5 °C temperature increases were inserted near the expected change from a cloudy to a complete opaque material. At each temperature, a picture of the sample solutions was taken, and the turbidity was measured quickly to prevent the example precursor solutions from cooling. Figures 5a to 5d illustrate 4 glass tubes, the two left most tubes contain alkali silicate intumescent layer precursor solution without additive, and the two right most tubes contain alkali silicate intumescent layer precursor solution including 0.7 weight % diethylene glycol additive. Figures 5e and 5f depict only the two tubes containing alkali silicate intumescent layer precursor solution without additive.

As depicted in Figure 5, starting from a clear material, the samples undergo a cloudy state ending up in a completely opaque material, depending on the temperature applied. For the alkali silicate intumescent layer precursor solution including 0.7 weight % diethylene glycol additive initiation occurs at between 75 °C and 85 °C, and the solution is completely opaque at 90 °C, while the solution without additive is not opaque until 110 °C.

As can be seen from Figure 6 and Table 6, the addition of additive, in particular DEG additive, allows a rapid increase in turbidity with temperature, associated with a sharp transition between transparent and opaque, which is desirable. Furthermore, the addition of additive causes the initiation temperature to be reduced significantly, by over 20 °C for 0.7 weight % DEG to between 80 °C and 85 °C. In addition, the addition of additive causes the opaque temperature to be reduced significantly, by over 20 °C for 0.7 weight % DEG to 90 °C.

In some embodiments there is provided a fire-resistant glazing comprising a first sheet of glazing material and an intumescent layer, wherein the intumescent layer comprises at least one phase separation additive, and wherein:
the intumescent layer undergoes a phase separation at a first temperature greater than 50 °C;
the intumescent layer intumesces at a second temperature greater than the first temperature; and
the difference between the first temperature and the second temperature is at least 10 °C.

Preferably, such a fire-resistant glazing comprises a first sheet of glazing material comprising glass, a second sheet of glazing material comprising glass, and an intumescent layer comprising alkali silicate, and the phase separation is such that the transmission of visible light through the glazing is reduced by 20%.

## Claims

1. A fire-resistant glazing comprising a first sheet of glazing material and an intumescent layer, wherein the intumescent layer comprises at least one phase separation additive.

2. A fire-resistant glazing according to claim 1, wherein the at least one phase separation additive comprises a weak acid, or a weak base and/or a compound that decomposes to form a gas.

3. A fire-resistant glazing according to claim 1 or claim 2, wherein the at least one phase separation additive comprises a weak acid having a pKₐ value of 17 or less, preferably the at least one phase separation additive comprises a weak acid having a pKₐ value of 15 or less.

4. A fire-resistant glazing according to any preceding claim, wherein the at least one phase separation additive comprises an alcohol, preferably an alcohol selected from triethylene glycol, diethylene glycol, di(propylene glycol) methyl ether.

5. A fire-resistant glazing according to any preceding claim, wherein the at least one phase separation additive does not comprise glycerol, and/or wherein the at least one phase separation additive does not comprise monoethylene glycol, and/or wherein the at least one phase separation additive does not comprise polyethylene glycol, and/or wherein the at least one phase separation additive does not comprise a hydroxylated amine compound, and/or wherein the phase separation additive does not comprise a quarternary ammonium salt, and/or wherein the phase separation additive does not comprise sodium azide.

6. A fire-resistant glazing according to any preceding claim, wherein the at least one phase separation additive does not comprise ethanol and/or wherein the at least one phase separation additive does not comprise methanol, and/or wherein the at least one phase separation additive does not comprise isopropanol.

7. A fire-resistant glazing according to any preceding claim, wherein the at least one phase separation additive comprises a weak base having a pK_{b} value of less than 17, preferably wherein the at least one phase separation additive comprises a weak base having a pK_{b} value of less than 15.

8. A fire-resistant glazing according to any preceding claim, wherein the at least one phase separation additive comprises a compound that decomposes to form a gas comprising COₓ, O₂, N₂, NₓO_{y}, SO_{z} wherein x may be 1 or 2, y may be 1, 2 or 3 and z may be 2 or 3.

9. A fire-resistant glazing according to any preceding claim, wherein the at least one phase separation additive comprises a carbonate, preferably a potassium and/or sodium carbonate, or a nitrate, preferably a potassium and/or sodium nitrate, or a citrate, preferably potassium citrate, or an organic compound, preferably urea, or sodium azide.

10. A fire-resistant glazing according to any preceding claim, wherein the intumescent layer comprises from 0.01 weight % to 2 weight % of the at least one phase separation additive.

11. A fire-resistant glazing according to any preceding claim, wherein the intumescent layer comprises alkali-silicate.

12. A fire-resistant glazing according to any preceding claim, wherein the fire-resistant glazing is substantially transparent to visible light at a temperature of less than or equal to 25 °C, preferably the fire-resistant glazing is substantially transparent to visible light at a temperature of less than or equal to 50 °C.

13. A fire-resistant glazing according to any preceding claim, wherein the intumescent layer transformation initiation temperature is from 60 to 120 °C, preferably from 65 to 110 °C, more preferably from 70 to 95 °C.

14. A precursor solution for forming an intumescent layer of a fire-resistant glazing comprising alkali silicate, water and at least one phase separation additive.

15. A precursor solution according to claim 14, wherein the precursor solution comprises from 0.01 weight % to 2 weight % of the least one phase separation additive.

16. A precursor solution according to claim 15, wherein the sum of the weight percentages of all phase separation additives in the precursor solution is from 0.01 weight % to 2 weight %.

17. A method of manufacturing a fire-resistant glazing according to any of claims 1 to 13, comprising the steps of:
(i) providing a substrate;
(ii) providing a precursor solution preferably according to any of claims 14 to 16;
(iii) applying the precursor solution to the substrate; and
(iv) curing the precursor solution to form an intumescent layer.

18. A method of manufacturing a fire-resistant glazing according to claim 17, wherein the substrate is a first sheet of glazing material arranged in a spaced-apart face-to-face arrangement with a second sheet of glazing material to provide a cavity, and the step of applying the precursor solution to the substrate comprises providing the precursor solution in the cavity.

19. A method of manufacturing a fire-resistant glazing according to claim 17, wherein the substrate is a first sheet of glazing material and the step of applying the precursor solution to the substrate comprises providing the precursor solution as a layer upon the first sheet of glazing material.

20. A method of manufacturing a fire-resistant glazing according to claim 17, wherein the intumescent layer is removed from the substrate and applied to a first sheet of glazing material after the step of curing the precursor.

21. A fire-resistant glazing assembly comprising a fire-resistant glazing according to any of claims 1 to 13, or manufactured by any of claims 17 to 20.

22. A fire-resistant glazing assembly according to claim 21, wherein the fire-resistant glazing assembly comprises more than one intumescent layer.

23. Use of a fire-resistant glazing according to any of claims 1 to 13, or a fire-resistant glazing assembly according to any of claims 21 to 22 in a building for reducing the passage of fire and/or smoke and/or heat.
